# EUROPÄISCHE PATENTSCHRIFT

(11) **EP 0 928 264 B1**
(45) Veröffentlichungstag und Bekanntmachung des Hinweises auf die Patenterteilung: **28.01.2004**
(21) Anmeldenummer: 98936210.8
(22) Anmeldetag: 18.06.1998
(51) Int. Cl.: B60S 1/34

(54) **BEFESTIGUNGSELEMENT SOWIE EIN VERFAHREN ZU SEINER HERSTELLUNG**
FASTENING ELEMENT AND MANUFACTURING METHOD THEREOF
ELEMENT DE FIXATION ET SON PROCEDE DE PRODUCTION

(30) Priorität: 17.07.1997 DE 19730579
(43) Veröffentlichungstag der Anmeldung: 14.07.1999
(73) Patentinhaber: ROBERT BOSCH GMBH, 70442 Stuttgart (DE)
(72) Erfinder: DAENEN, Roger, B-3770 Vlytingen-Riemst (BE)
(86) Internationale Anmeldenummer: PCT/DE1998/001667
(87) Internationale Veröffentlichungsnummer: WO 1999/003713

(56) Entgegenhaltungen:
- EP-A- 0 584 018
- EP-A- 0 670 252
- DE-A- 4 444 328

## Beschreibung

### Stand der Technik

Die Erfindung geht von einem Befestigungselement für einen Wischerarm gemäß den Merkmalen des Oberbegriffs des Patentanspruchs 1 aus sowie von einem Verfahren zu seiner Herstellung.

Befestigungselemente für Scheibenwischer, insbesondere für den Wischerarm, bestehen häufig aus Zink oder einer Zinklegierung, die durch Druckgießen in einer Druckgießform hergestellt werden. Das Zink läßt sich sehr gut verarbeiten, schont das Druckgießwerkzeug und ermöglicht sehr gute Oberflächenqualitäten. Es hat sich jedoch herausgestellt, daß Zink sein Gefüge in belasteten Bereichen im Laufe der Zeit verändert. Das Material versprödet, wodurch sich die Bruchgefahr erhöht. Dies tritt verstärkt bei längeren Befestigungselementen aufgrund größerer Biegespannungen und insbesondere an den Verbindungsstellen zu angrenzenden Bauteilen auf, wie beispielsweise im Bereich einer konischen Nabe des Befestigungselements, die mittels einer Mutter auf eine gerändelte konische Antriebsachse eines Scheibenwischerantriebs gepreßt wird. Es entstehen Zugspannungen, die sich mit den Biegespannungen überlagern, wodurch die Bruchgefahr weiter steigt.

Aus der EP-A-0 584 018 ist ein Befestigungselement mit einem kunststoffumgossenen Blechteil bekannt. Das Blechteil besitzt an einem Ende eine konische Nabe und am anderen Ende eine Lagerstelle für eine Achse. Im Bereich der Lagerstelle ragt das Blechteil mit einem gebogenen Teilstück aus dem Kunststoff, in dem sich ein Loch zum Einhängen einer Zugfeder befindet. Das Blechteil besitzt am äußeren Umfang im Bereich der konischen Nabe Aussparungen bzw. Zacken, damit zwischen der Kunststoffummantelung und dem Blechteil ein günstiger Formschluß erreicht wird.

Bei der Montage wird das Befestigungselement direkt mit der konischen Nabe des Blechteils auf die Antriebsachse gepreßt, wodurch die Rändelstruktur der Antriebsachse beschädigt werden kann, so daß die Kraftübertragung nicht mehr ausreicht, wenn ein Auswechselteil montiert werden muß.

Aus der DE-A-44 44 328 ist ein Befestigungselement aus Zink, einer Zinklegierung oder aus Aluminium bzw. einer Aluminiumlegierung bekannt, in dem zumindest im Bereich einer konischen Nabe ein Verstärkungselement eingegossen ist, das die Nabe umgibt und das sich seelenartig zumindest teilweise innerhalb des Körpers des Befestigungselements erstreckt.

Das Verstärkungselement besitzt Fortsätze, die sich mindestens bis zur Oberfläche des Körpers des Befestigungselements erstrecken. Dadurch kann das Verstärkungselement bei der Herstellung in seiner Lage exakt fixiert werden, so daß im kritischen Nabenbereich enge Toleranzen eingehalten werden können. Ferner wird in DE-A-44 44 328 vorgeschlagen, daß sich das Verstärkungselement über die gesamte Länge in dem Körper des Befestigungselements erstreckt, wodurch Materialeinsparungen und damit schlanke Befestigungselemente erzielt werden können.

Die stoffschlüssige Verbindung zwischen Gußwerkstoff und Verstärkungselement wird unterstützt, indem ein formschlüssiger Verbund mit Durchbrüchen, Löchern oder Schlitzen im Verstärkungselement geschaffen wird.

Um bei der Montage die Rändelstruktur auf der Antriebsachse nicht zu zerstören, wird vorgeschlagen, daß das Verstärkungselement auch zu einer Mittelachse der Nabe von Gußmaterial umgeben ist, und zwar vorzugsweise mit einer Wandstärke von ca. 1,5 mm. Dadurch kann sich die Rändelstruktur in das weiche Gußmaterial eingraben, um hohe Kräfte mit Form- und Kraftschluß zu übertragen. Aufgrund der geringen Wandstärke werden die Biegespannungen und Zugspannungen nahezu allein von dem Verstärkungselement aufgenommen.

Weiter ist bekannt, insbesondere bei längeren Befestigungselementen statt Zink Aluminium oder eine Aluminiumlegierung zu verwenden, um damit eine bessere Dauerfestigkeit zu erreichen und Sprödbrüche zu verhindern. Jedoch greift Aluminium das Druckgießwerkzeug an, wodurch höhere Nacharbeitungskosten und geringere Werkzeugstandzeiten entstehen. Ferner sind die Materialkosten von Aluminium höher als von Zink.

Die beschriebenen Befestigungselemente aus dem Stand der Technik werden mit einer Gußform gegossen bzw. umgossen. Sind unterschiedlich lange oder sich in der Form unterscheidende Befestigungselemente zu fertigen, ist für jede Variante eine eigene Gussform erforderlich.

Aus der EP-A-0 670 252 ist ein Befestigungselement für einen Wischerarm bekannt, das an einem Ende einen ersten Befestigungsbereich mit einer konischen Nabe und an einem anderen Ende einen zweiten Befestigungsbereich mit einer Lagerstelle aufweist. Die Befestigungsbereiche sind von zwei voneinander getrennten Köpfen gebildet, die an zwei Enden eines mittleren, sich in einer Längsrichtung erstreckenden, vorgefertigten Trägerteils angegossen sind.

### Vorteile der Erfindung

Das Befestigungselement besteht aus einem mittleren, sich in Längsrichtung erstreckenden, vorgefertigten Trägerteil, das aus Aluminium oder vorzugsweise aus Stahl oder einer Stahllegierung in einem Biege-Stanz-Vorgang gefertigt ist. An den Enden des vorgefertigten Trägerteils werden nachträglich voneinander getrennte Befestigungsbereiche in der Form von Köpfen angegossen, wovon einer eine konische Nabe und der andere eine Lagerstelle für den Wischerarm hat. Als Gussmaterial für die Köpfe eignen sich besonders gut Zink, eine Zinklegierung, Aluminium, eine Aluminiumlegierung, Magnesium, eine Magnesiumlegierung oder auch bei bestimmten Ausgestaltungen Kunststoff.

Bei verschiedenen Varianten der Befestigungselemente sind häufig nur die Längen und die Formen unterschiedlich, wobei die Befestigungsbereiche gleich ausgeführt werden können. Mit dem erfindungsgemäßen Befestigungselement können an verschiedenen ausgestalteten Trägerteilen Standardköpfe angegossen und damit kostengünstig verschiedene Varianten geschaffen werden, ohne dass verschiedene Gussformen erforderlich sind. Es werden die Anzahl der erforderlichen Werkzeuge und damit die Werkzeugkosten reduziert. Ferner trägt zu geringen Werkzeugen bei, dass die Gussformen kleiner ausgestaltet sind, da sie nicht das gesamte Befestigungselement umgeben, sondern nur die Enden, wodurch Gussmaterial eingespart wird. Zudem wird die Fertigung erleichtert, indem das Trägerteil exakt ohne Fortsätze fixierbar ist. Die Gießwerkzeuge und eine Fixiervorrichtung können funktionell und räumlich getrennt und damit kostengünstig ausgeführt werden.

Mit einem biegesteifen Trägerteil, beispielsweise aus Stahl, einer Stahllegierung und mit einem Hohlprofil, einem U-Profil, einem T-Profil usw., können besonders leichte und schlanke Befestigungselemente mit einer geringen Windangriffsfläche geschaffen werden.

Im Bereich der Nabe ist das Befestigungselement besonders bruch- und verwindungsgefährdet, da in diesem Bereich die größten Biegespannungen aufgrund der längsten Hebelarme auftreten. Die Biegespannungen sind zudem von Zugspannungen überlagert, die durch die Montage der konischen Nabe auf einer konischen Antriebsachse entstehen. Erfindungsgemäß wird vorgeschlagen, dass in diesem Bereich in den Kopf ein die Nabe umgebendes Einlegeteil aus zugfestem Material eingegossen ist, das in diesem Bereich die Zug- und Biegespannungen aufnimmt und das Gussmaterial entlastet. Als Material für das Einlegeteil kommt Stahl, eine Stahllegierung, Aluminium, eine Aluminiumlegierung oder ein sonst dem Fachmann geläufiges belastbares Material in Frage. Dadurch können andere Anforderungen an das Gussmaterial stärker berücksichtigt werden, wie beispielsweise gute Verarbeitbarkeit, hohe Oberflächenqualität usw..

Durch die Merkmale nach den Unteransprüchen sind weitere vorteilhafte Ausführungen des Befestigungselements möglich.

Um einen günstigen Kraftfluss von dem Kopf und speziell dem Einlegeteil zu dem Trägerteil zu erreichen, wird in einer Ausgestaltung der Erfindung das Einlegeteil und das Trägerteil form- und oder kraftschlüssig miteinander verbunden. Spannungsspitzen an Übergängen vom Trägerteil zum angegossenen Kopf werden vermieden, wodurch der gesamte Kopf schlank, leicht und mit wenig Gussmaterial ausgeführt werden kann. Insbesondere können bei dieser Ausgestaltung Gussmaterialien mit einer geringen Festigkeit verwendet werden, wie beispielsweise verschiedene Kunststoffe. Das Einlegeteil und das Trägerteil können hierzu mit geläufigen Steck- und Spannverbindungen miteinander verbunden werden.

Kommt das Einlegeteil im Bereich der konischen Nabe direkt mit der konisch ausgeführten Antriebsachse in Verbindung, kann die Oberfläche der Antriebsachse beschädigt werden, insbesondere wenn diese eine Rändelstruktur aufweist. Um dies zu vermeiden kann die Antriebsachse gehärtet werden. In einer Ausgestaltung der Erfindung wird jedoch vorgeschlagen, daß das Einlegeteil zu einer Mittelachse der Nabe mit Gußmaterial mit einer Wandstärke von ca. 1,5 mm beschichtet ist. Die Rändelstruktur auf der Antriebsachse kann sich in das weiche Material eingraben und durch Formschluß hohe Drehkräfte übertragen, ohne daß die Rändelstruktur zerstört wird. Mechanische Belastungen, wie Druck und Biegespannung werden jedoch aufgrund der geringen Wandstärke nahezu allein von dem Einlegeteil aufgenommen.

Das Gußmaterial zur Mittelachse der Nabe kann durch einen zweiten Kanal am Gießwerkzeug angespritzt werden. Vorteilhaft ist es jedoch, wenn nur ein Kanal für das innenliegende und das außenliegende Gußmaterial erforderlich ist. Dies wird erfindungsgemäß mit einem Bereich an einer oberen und/oder an einer unteren Stirnseite der Nabe erreicht, über den das innere und das äußere Gußmaterial miteinander verbunden sind. Bei der Herstellung des Kopfes kann über diesen Bereich das Gußmaterial vom äußeren zum inneren Teil der Nabe oder umgekehrt strömen. Ferner wird vorgeschlagen, in die Nabe Ausnehmungen einzubringen bzw. Naben mit Ausnehmungen zu verwenden, über die ebenfalls das Gußmaterial strömt, wodurch sich das Gußmaterial schnell und gleichmäßig verteilen kann.

Das Befestigungsteil wird mittels einer Mutter mit seiner konischen Nabe von oben auf eine konische Antriebsachse gepreßt. Dadurch entstehen im oberen, engeren Bereich der Nabe, insbesondere an der Oberfläche des Kopfes, an der sich die Mutter abstützt, besonders hohe Montagespannungen bzw. Flächenpressungen und Zugspannungen, die den Querschnitt gefährden. In einer Ausgestaltung der Erfindung wird vorgeschlagen, daß das Einlegeteil zum engeren Bereich der Nabe hin einen Bund aufweist. Vorzugsweise reicht der Bund bis an die Oberfläche des Kopfes, wodurch sich die Mutter auf dem Einlegeteil abstützen kann und im obersten, engsten Bereich der Nabe die Flächenpressungen und Zugspannungen vollständig durch den Bund aufgenommen werden können.

Im zweiten Kopf des Befestigungselements ist eine Lagerstelle für den Wischerarm angeordnet. In der Regel ist der Wischerarm über eine Achse mit dem Befestigungselement verbunden, die in einer Lagerbuchse im Befestigungselement geführt ist. Im Befestigungselement ist an einem Stift ein Haltebügel mit einer Zugfeder eingehängt, die mit dem Wischerarm verbunden ist, die beiden Bauteile miteinander verspannt und den Scheibenwischer gegen die Windschutzscheibe drückt. Vorzugsweise wird die Lagerbuchse in den Kopf eingegossen, wodurch später ein Montagearbeitsgang gespart wird, jedoch kann die Achse auch direkt im Gußmaterial gelagert werden, wenn dieses ausreichende Gleiteigenschaften aufweist oder die Achse in diesem keine oder nur wenige Relativbewegungen ausführt.

Ferner kann der Stift für die Zugfeder in den Kopf eingegossen und damit ein weiterer Montagearbeitsgang eingespart werden. Dieser Effekt wird zudem mit einem Trägerteil erreicht, das im Kopfbereich aus dem Gußmaterial herausragt und ein Loch oder eine Hinterschneidung aufweist, in die die Zugfeder eingehängt werden kann. Damit werden die Stifte für die Befestigungselemente eingespart.

Um den Stoffschluß zwischen Gußmaterial und Trägerteil zu unterstützen, wird vorgeschlagen, daß das Trägerteil durch eine Formgebung mit einem oder beiden Köpfen formschlüssig verbunden ist, beispielsweise mittels Durchbrüchen wie Löcher, Schlitze, vorteilhaft mit Kragen oder Durchzügen, mittels Hinterschneidungen, Zacken, Aussparungen usw.. Dies ist besonders bei Zink oder Zinklegierungen wichtig, die mit dem Trägerteil beim Druckgießen keine metallische Verbindung eingehen.

Ein Verfahren zum Herstellen der Befestigungselemente zeichnet sich vorteilhaft dadurch aus, daß mit einer Druckgießvorrichtung und zwei Druckgießformen an verschiedenen Trägerteilen Standardköpfe angegossen werden können, indem die Druckgießformen nacheinander oder gleichzeitig zueinander oder zu jeweils einem Ende des Trägerteils entsprechend der zu fertigenden Variante justiert werden. Die Druckgießformen können klein und ohne Fixiervcrrichtungen für das Trägerteil und damit kostengünstig ausgeführt werden. Vorzugsweise wird bei dem Verfahren ein Adaptionsstück zwischen den Druckgießformen angeordnet, mit dem das Trägerteil fixiert und die Druckgießformen zueinander justiert werden. Das Adaptionsstück ist für verschiedene Varianten schnell und leicht austauschbar und zudem sind die Druckgießformen schnell zueinander bzw. zu dem Trägerteil fixierbar.

### Zeichnung

In der Zeichnung sind Ausführungsbeispiele der Erfindung dargestellt. In der Beschreibung und in den Ansprüchen sind zahlreiche Merkmale im Zusammenhang beschrieben. Der Fachmann wird die Merkmale zweckmäßigerweise auch einzeln betrachten und zu sinnvollen Kombinationen zusammenfassen.
Es zeigen:
- Fig. 1: ein Befestigungselement von unten,
- Fig. 2: einen vergrößerten Teilschnitt entlang der Linie II-II in Fig. 1,
- Fig. 3: eine Variante zu der Ausgestaltung in Fig. 2,
- Fig. 4: eine Variante zu der Ausgestaltung in Fig. 2,
- Fig. 5: eine Seitenansicht des Befestigungselements,
- Fig. 6: einen Schnitt entlang der Linie VI-VI in Fig. 5,
- Fig. 7: einen Schnitt entlang der Linie VII-VII in Fig . 6,
- Fig. 8: eine Variante zu der Ausgestaltung in Fig. 7 und
- Fig. 9: ein in einem Adaptionsstück fixiertes Befestigungselement und zwei Druckgießformen.

### Beschreibung der Ausführungsbeispiele

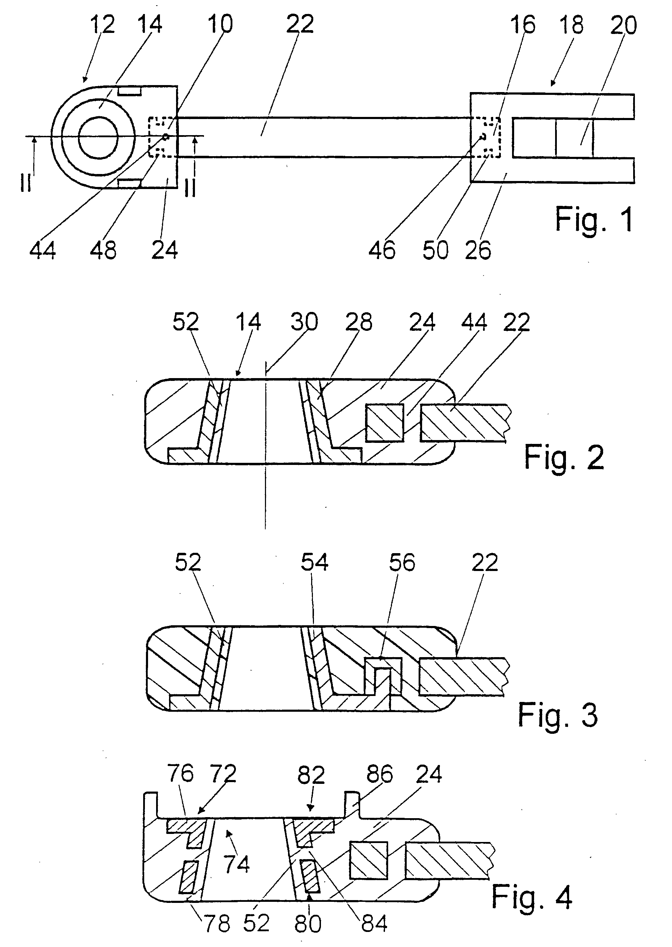

In Fig. 1 ist ein Befestigungselement für einen Wischerarm bzw. für einen Scheibenwischer dargestellt, das auf einer konischen, nicht dargestellten Antriebsachse befestigt wird. Das Befestigungselement hat an einem Ende einen ersten Befestigungsbereich 12 mit einer konischen Nabe 14 und an einem anderen Ende einen zweiten Befestigungsbereich 18 mit einer Lagerstelle 20 für den Wischerarm. Erfindungsgemäß weißt das Befestigungselement ein mittleres sich in Längsrichtung erstreckendes vorgefertigtes Trägerteil 22 auf, an dessen Enden 10, 16 die Befestigungsbereiche 12, 18 als zwei voneinander getrennte angegossene Köpfe 24, 26 ausgebildet sind. Als Werkstoff für das Trägerteil 22 eignen sich Werkstoffe mit einer hohen Zugfestigkeit, wie insbesondere Stahl oder eine Stahllegierung. Vorzugsweise wird es in einem Biege-Stanz-Vorgang hergestellt. Für den Werkstoff der Köpfe 24, 26 eignen sich Werkstoffe die gut druckgießbar sind, wie beispielsweise Zink, Aluminium, Magnesium usw. und Legierungen davon, wobei mit Zink Oberflächen mit besonders hoher Qualität möglich sind und außerdem hierfür verwendete Druckgießwerkzeuge hohe Standzeiten erreichen, da Zink diese nicht angreift.

Die Enden 10, 16 des Trägerteils 22 besitzen eine Formgebung, beispielsweise Löcher 44, 46, Aussparungen 48, 50 usw., damit der Stoffschluß zwischen den angegossenen Köpfen 24, 26 und dem Trägerteil 22 durch Formschluß unterstützt wird.

Der Bereich der Nabe 14 ist durch Zugspannungen von der Montage auf die konische Antriebsachse und durch hohe Biegespannungen infolge langer Hebelarme besonders bruch- und verwindungsgefährdet (Fig. 2). Um die Bruch- und Verwindungsgefahr zu reduzieren wird ein die Nabe 14 umgebendes Einlegeteil 28 in den Kopf 24 eingegossen. Die Biegespannungen und Zugspannungen werden nahezu vollständig von dem Einlegeteil 28 aufgenommen. Die Nabe 14 wird von oben über eine Mutter auf eine Antriebsachse gepreßt, wodurch im oberen, engeren Bereich 74 der Nabe 14 besonders große Spannungen auftreten. In einer in Fig. 4 dargestellten Variante besitzt das Einlegeteil 72 zum engeren Bereich 74 der Nabe 14 einen Bund 76. Der Bund 76 reicht bis zur Oberfläche des Kopfes 24. Dadurch kann sich die Mutter auf dem Bund 76 des Einlegeteils 72 abstützen, wodurch Flächenpressungen und Zugspannungen im oberen Bereich 74 der Nabe 14 nahezu vollständig von dem Bund 76 aufgenommen werden können und das restliche Gußmaterial entlastet werden kann. Die Mutter ist vorzugsweise von einem Führungssteg 86 umgeben, der die Montage erleichtert und die Mutter schützt. Als Werkstoffe für das Einlegeteil 28 eignen sich besonders zugfeste und biegesteife Werkstoffe, wie beispielsweise Stahl, eine Stahllegierung, Aluminium, eine Aluminiumlegierung usw..

Kommt das Einlegeteil 28 direkt mit der konischen Antriebsachse in Kontakt, kann die Oberfläche der Antriebsachse bei der Montage beschädigt werden, insbesondere wenn sie eine Rändelstruktur aufweist und nicht oberflächengehärtet ist. Es wird vorgeschlagen, daß das Einlegeteil 28 in der Art umgossen wird, das es zu einer Mittelachse 30 der Nabe 14 eine Gußschicht 52 aufweist. Die Gußschicht 52 befindet sich zwischen Einlegeteil 28 und Antriebsachse und ist vorzugsweise 1,5 mm stark. Damit kann sich die Rändelstruktur der Antriebsachse bei der Montage in das weiche Gußmaterial eingraben ohne zerstört zu werden und die Biegespannungen und Zugspannungen werden zudem aufgrund der geringen Wandstärke nahezu vollständig vom Einlegeteil 28 aufgenommen. Die innere Gußschicht 52 kann durch einen zweiten Kanal am Gießwerkzeug angespritzt werden.

Bei der in Fig. 4 dargestellten Ausführung der Erfindung können jedoch der Kopf 24 und die innere Gußschicht 52 mit nur einem Kanal angespritzt werden, indem die innere Gußschicht 52 mit dem restlichen Kopf 24 über einen Bereich 78 an einer Stirnseite 80 des Einlegeteils 72 verbunden ist. Neben dem Bereich 78 kann sich das Gußmaterial vom außeren zum inneren Bereich des Einlegeteils 72 oder umgekehrt über Ausnehmungen 84 verteilen, die eine gleichmäßige und auch schnelle Verteilung unterstützen. Der Bereich 78 und die Ausnehmungen 84 können gemeinsam oder auch einzeln genutzt werden. Möglich ist auch, daß an der Stirnseite 82 des Einlegeteils die Gußschicht 52 mit dem restlichen Kopf über einen nicht dargestellten Bereich verbunden ist.

In einer in Fig. 3 dargestellten Ausgestaltung der Erfindung ist ein Einlegeteil 54 form- und/oder kraftschlüssig mit dem Trägerteil 22 über eine Steckverbindung 56 verbunden, um einen günstigen Kraftfluß vom Trägerteil 22 auf das Einlegeteil 54 zu erreichen, ohne daß Spannungsspitzen an Übergängen entstehen. Insbesondere bei einer derartigen Ausgestaltung sind auch Köpfe 24, 26 aus Kunststoff denkbar.

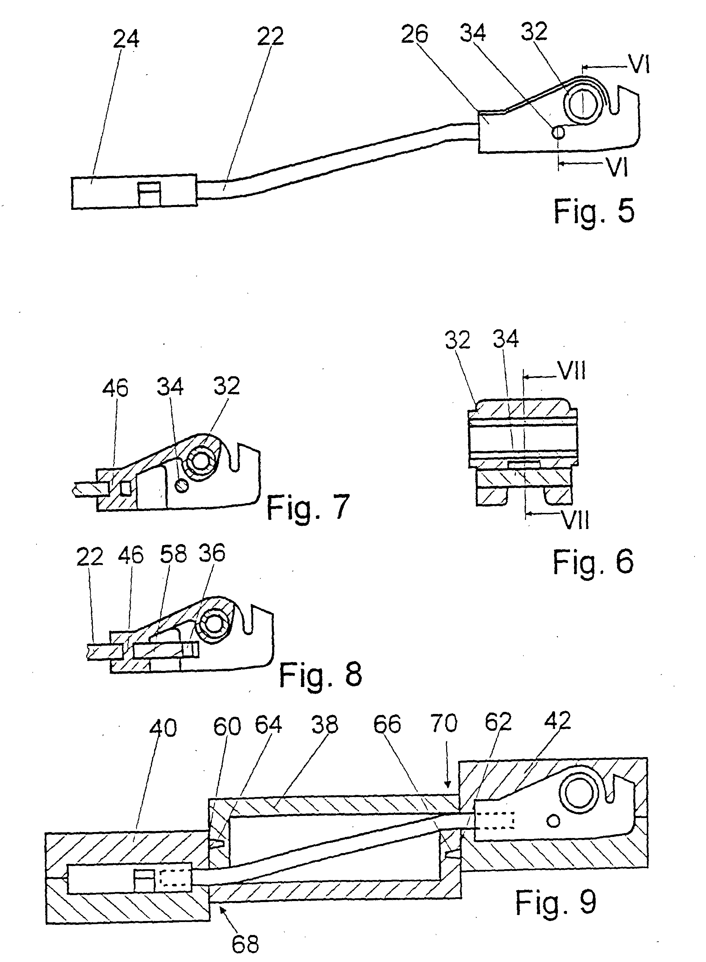

In dem Kopf 26 wird ein nicht dargestellter Wischerarm über eine Achse angelenkt (Fig. 5). Der Wischerarm und das Befestigungselement sind zudem über eine ebenfalls nicht dargestellte Zugfeder verbunden, die mit einem Bügel an einem Stift 34 von unten im Befestigungselement eingehängt ist. Für die Achse wird vorzugsweise eine Lagerbuchse 32 und/oder für die Zugfeder der Stift 34 mit in den Kopf 26 eingegossen, wodurch Montagearbeitsgänge eingespart werden. In Fig. 6 und in Fig. 7 ist zu erkennen, daß die Lagerbuchse 32 vorzugsweise vollständig mit Gußmaterial umgeben ist, wodurch ein sicherer Halt erreicht wird.

Bei einer Variante nach Fig. 8 weist das Trägerteil 22 anstatt eines Stifts 34 einen aus dem Kopf 26 herausragenden Bereich 58 auf, der ein Loch 36, eine Hinterschneidung oder sonst eine Formgebung hat, in die der Bügel oder die Zugfeder selbst eingehängt werden kann. Damit kann der Stift 34 eingespart werden.

Bei einem Herstellungsverfahren des Befestigungselements wird das Trägerteil 22 zuerst in einer Spannvorrichtung fixiert.

Diese wird vorzugsweise von einem Adaptionsstück 38 gebildet, das das Trägerteil 22 an zwei äußeren Stellen 68, 70 fixiert (Fig. 9). Anschließend werden zwei Druckgießformen 40, 42 nacheinander oder vorzugsweise gleichzeitig zum Trägerteil 22 und zueinander justiert. Das Adaptionsstück 38 kann dazu genutzt werden die Druckgießformen 40, 42 schnell zu justieren, indem diese an dafür vorgesehene Paßflächen 60, 62 mit oder ohne Führungsvorrichtungen angefahren werden, wie beispielsweise konische Zapfen 64, 66. Sind die Druckgießformen 40, 42 richtig positioniert, werden diese geschlossen und umschließen dabei die Enden 10, 16 des Trägerteils 22 dicht. Der Gußwerkstoff wird unter Druck in die Druckgießformen 40, 42 eingespritzt und umschließt die Enden 10, 16 des Trägerteils 22. Sind Befestigungselemente mit anderen Abmessungen und den gleichen Köpfen 24, 26 zu fertigen, wird nur das Adaptionsstück 38 ausgetauscht und die Druckgießformen 40, 42 können an einem neuen Adaptionsstück 38 schnell ausgerichtet werden.

## Patentansprüche

1. Befestigungselement für einen Wischarm, das an einem Ende einen ersten Befestigungsbereich (12) mit einer konischen Nabe (14) und an einem anderen Ende einen zweiten Befestigungsbereich (18) mit einer Lagerstelle (20) aufweist, wobei die Befestigungsbereiche (12, 18) von voneinander getrennten, an zwei Enden (10, 16) eines mittleren, sich in einer Längsrichtung erstreckenden, vorgefertigten Trägerteils (22) angegossenen Köpfen (24, 26) gebildet sind, **dadurch gekennzeichnet, dass** in den ersten Kopf (24) mit der konischen Nabe (14) ein die Nabe (14) umgebendes Einlegeteil (28, 54, 72) angegossen ist.

2. Befestigungselement nach Anspruch 1, **dadurch gekennzeichnet, dass** das Einlegeteil (54) mit dem Trägerteil (22) form- und/oder kraftschlüssig verbunden ist.

3. Befestigungselement nach Anspruch 1 oder 2, **dadurch gekennzeichnet, dass** das Einlegeteil (28, 54, 72) zu einer Mittelachse (30) der Nabe (14) eine Gussschicht (52) aufweist.

4. Befestigungselement nach einem der Ansprüche 1 bis 3, **dadurch gekennzeichnet, dass** das Einlegeteil (72) zum engeren Bereich (74) der Nabe (14) hin einen Bund (76) aufweist.

5. Befestigungselement nach Anspruch 3 oder 4, **dadurch gekennzeichnet, dass** die Gussschicht (52) über einen Bereich (78) an zumindest einer Stirnseite (80, 82) des Einlegeteils (72) und/oder durch zumindest eine Ausnehmung (84) im Einlegeteil (72) mit dem restlichen Gussmaterial verbunden ist.

6. Befestigungselement nach einem der vorhergehenden Ansprüche, **dadurch gekennzeichnet, dass** in den zweiten Kopf (26) eine Lagerbuchse (32) eingegossen ist.

7. Befestigungselement nach einem der vorhergehenden Ansprüche, **dadurch gekennzeichnet, dass** in den zweiten Kopf (26) ein Stift (34) eingegossen ist.

8. Befestigungselement nach einem der Ansprüche 1 bis 6, **dadurch gekennzeichnet, dass** das Trägerteil (22) einen aus dem zweiten Kopf (26) herausragenden Bereich (58) mit einem Loch (36) oder einer Hinterschneidung aufweist.

9. Befestigungselement nach einem der vorhergehenden Ansprüche, **dadurch gekennzeichnet, dass** das Trägerteil (22) durch eine Formgebung mit einem oder beiden Köpfen (24, 26) formschlüssig verbunden ist.

10. Befestigungselement nach einem der vorhergehenden Ansprüche, **dadurch gekennzeichnet, dass** die Köpfe (24, 26) aus Zink, einer Zinklegierung, aus Aluminium, einer Aluminiumlegierung oder aus Magnesium bzw. einer Magnesiumlegierung bestehen.

11. Befestigungselement nach einem der Ansprüche 1 bis 9, **dadurch gekennzeichnet, dass** einer oder beide Köpfe (24, 26) aus Kunststoff bestehen.

12. Befestigungselement nach einem der vorhergehenden Ansprüche, **dadurch gekennzeichnet, dass** das Trägerteil (22) aus Stahl, einer Stahllegierung oder aus Aluminium bzw. einer Aluminiumlegierung besteht.

13. Befestigungselement nach einem der vorhergehenden Ansprüche, **dadurch gekennzeichnet, dass** die Einlegeteile (28, 54, 72) aus Stahl, einer Stahllegierung oder Aluminium bzw. einer Aluminiumlegierung bestehen.

14. Verfahren zum Herstellen des Befestigungselements nach einem der vorhergehenden Ansprüche, **gekennzeichnet durch** folgende Schritte:
- das Trägerteil (22) wird in einer Spannvorrichtung fixiert,
- zwei Druckgießformen (40, 42) werden gleichzeitig an den Enden (10, 16) des Trägerteils (22) zueinander justiert,
- die Druckgießform (40) wird geschlossen und umschließt dicht das Ende (10) des Trägerteils (22),
- der Gusswerkstoff wird unter Druck in die Druckgießform (40) eingespritzt und umschließt das Ende (10) des Trägerteils (22).

15. Verfahren nach Anspruch 14, **dadurch gekennzeichnet, dass** zwischen den Druckgießformen (40, 42) ein Adaptionsstück (38) angeordnet wird.

## Claims

1. Fastening element for a wiper arm, which at one end has a first fastening region (12) with a conical hub (14) and at another end has a second fastening region (18) with a bearing location (20), the fastening regions (12, 18) being formed by separate heads (24, 26) which are cast on integrally at two ends (10, 16) of a middle carrier part (22) which is prefabricated and extends in a longitudinal direction, **characterized in that** an insert part (28, 54, 72) which surrounds the conical hub (14) is cast on integrally into the first head (24) with the hub (14).

2. Fastening element according to Claim 1, **characterized in that** the insert part (54) is connected to the carrier part (22) in a positively and/or non-positively locking manner.

3. Fastening element according to Claim 1 or 2, **characterized in that** the insert part (28, 54, 72) has a cast layer (52) facing a centre axis (30) of the hub (14).

4. Fastening element according to one of Claims 1 to 3, **characterized in that** the insert part (72) has a collar (76) facing the narrower region (74) of the hub (14) .

5. Fastening element according to Claim 3 or 4, **characterized in that** the cast layer (52) is joined to the remainder of the cast material via a region (78) at at least one end side (80, 82) of the insert part (72) and/or by at least one recess (84) in the insert part (72) .

6. Fastening element according to one of the preceding claims, **characterized in that** a bearing sleeve (32) is cast into the second head (26).

7. Fastening element according to one of the preceding claims, **characterized in that** a pin (34) is cast into the second head (26).

8. Fastening element according to one of Claims 1 to 6, **characterized in that** the carrier part (22) has a region (58) which projects out of the second head (26) and has a hole (36) or an undercut.

9. Fastening element according to one of the preceding claims, **characterized in that** the carrier part (22) is connected in a positively locking manner to one or both heads (24, 26) by means of a special shaping.

10. Fastening element according to one of the preceding claims, **characterized in that** the heads (24, 26) consist of zinc, a zinc alloy, of aluminium, an aluminium alloy or of magnesium or a magnesium alloy.

11. Fastening element according to one of Claims 1 to 9, **characterized in that** one or both heads (24, 26) consist of plastic.

12. Fastening element according to one of the preceding claims, **characterized in that** the carrier part (22) consists of steel, a steel alloy or of aluminium or an aluminium alloy.

13. Fastening element according to one of the preceding claims, **characterized in that** the insert parts (28, 54, 72) consist of steel, a steel alloy or aluminium or an aluminium alloy.

14. Process for producing the fastening element according to one of the preceding claims, **characterized by** the following steps:
- the carrier part (22) is fixed in a clamping fixture,
- two pressure die-casting dies (40, 42) are simultaneously adjusted with respect to one another at the ends (10, 16) of the carrier part (22) ,
- the pressure die-casting die (40) is closed and tightly surrounds the end (10) of the carrier part (22) ,
- the casting material is injected into the pressure die-casting die (40) under pressure and surrounds the end (10) of the carrier part (22).

15. Process according to Claim 14, **characterized in that** an adapter piece (38) is arranged between the pressure die-casting dies (40, 42).

## Revendications

1. Elément de fixation d'un bras d'essuie-glace ayant à une extrémité, une première zone de fixation (12) à moyeu conique (14) et à son autre extrémité, une seconde zone de fixation (18) avec un palier (20),
les zones de fixation (12, 18) étant formées par des têtes (24, 26) séparées, prévues aux deux extrémités (10, 16) d'une pièce de support préfabriquée (22), intermédiaire s'étendant dans la direction longitudinale, les têtes étant coulées,
**caractérisé en ce que**
dans la première tête (24) on effectue le surmoulage d'un insert (28, 54, 72) entourant le moyeu conique (14).

2. Elément de fixation selon la revendication 1,
**caractérisé en ce que**
l'insert (54) est relié à la pièce de support (22) par une liaison par la forme et/ou la force.

3. Elément de fixation selon l'une quelconque des revendications 1 ou 2,
**caractérisé en ce que**
l'insert (28, 54, 72) comporte une couche coulée (52) du côté de l'axe (30) du moyeu (14).

4. Elément de fixation selon l'une quelconque des revendications 1 à 3,
**caractérisé en ce que**
l'insert (72) présente une collerette (76) en direction de la zone étroite (74) du moyeu (14).

5. Elément de fixation selon l'une quelconque des revendications 3 ou 4,
**caractérisé en ce que**
la couche coulée (52) est reliée par une zone (78) d'au moins une face frontale (80, 82) de l'insert (72) et/ou au moins une cavité (84) dans la partie insert (72) avec la matière coulée résiduelle.

6. Elément de fixation selon l'une quelconque des revendications précédentes,
**caractérisé par**
un coussinet (32) coulé dans la seconde tête (26).

7. Elément de fixation selon l'une quelconque des revendications précédentes,
**caractérisé par**
une broche (34) coulée dans la seconde tête (26).

8. Elément de fixation selon l'une quelconque des revendications 1 à 6,
**caractérisé en ce que**
la pièce de support (22) comporte une zone (58) sortant de la seconde tête (26) et ayant un trou (36) ou une partie en contre-dépouille.

9. Elément de fixation selon l'une quelconque des revendications précédentes,
**caractérisé en ce que**
la pièce de support (22) est reliée à une ou aux deux têtes (24, 26) par une liaison de forme obtenue par une mise en forme.

10. Elément de fixation selon l'une quelconque des revendications précédentes,
**caractérisé en ce que**
les têtes (24, 26) sont en zinc, en alliage de zinc, en aluminium, en alliage d'aluminium ou en magnésium ou en alliage de magnésium.

11. Elément de fixation selon l'une quelconque des revendications 1 à 9,
**caractérisé en ce que**
l'une des deux têtes (24, 26) est en matière plastique.

12. Elément de fixation selon l'une quelconque des revendications précédentes,
**caractérisé en ce que**
la pièce de support (22) est en acier, en alliage d'acier ou en aluminium ou en alliage d'aluminium.

13. Elément de fixation selon l'une quelconque des revendications précédentes,
**caractérisé en ce que**
les inserts (28, 54, 72) sont en acier, en alliage d'acier ou en aluminium ou en alliage d'aluminium.

14. Procédé de fabrication d'un élément de fixation selon l'une quelconque des revendications précédentes,
**caractérisé en ce qu'**
- on bloque la pièce de support (22) dans un dispositif de serrage,
- on ajuste deux moules de coulée (40, 42) en même temps aux extrémités (10, 16) de la pièce de support (22),
- on ferme le moule de coulée sous pression (40) et il ferme de manière étanche l'extrémité (10) de la pièce de support (22),
- on injecte une matière sous pression dans le moule de coulée sous pression (40) pour envelopper l'extrémité (10) de la pièce de support (22).

15. Procédé selon la revendication 14,
**caractérisé par**
un adaptateur (38) installé entre les moules de coulée sous pression (40, 42).
